# EUROPÄISCHE PATENTSCHRIFT

(11) **EP 1 336 723 B1**
(45) Veröffentlichungstag und Bekanntmachung des Hinweises auf die Patenterteilung: **05.03.2008**
(21) Anmeldenummer: 03001067.2
(22) Anmeldetag: 18.01.2003
(51) Int. Cl.: F01D 5/20, F01D 5/22, F01D 11/12

(54) **Turbinenlaufschaufel für den Läufer eines Gasturbinentriebwerks**
Turbine blade for the rotor of a gas turbine
Aube mobile pour le rotor d'une turbine

(30) Priorität: 25.01.2002 DE 10202810
(43) Veröffentlichungstag der Anmeldung: 20.08.2003
(73) Patentinhaber: MTU Aero Engines GmbH, 80995 München (DE)
(72) Erfinder: Grunke, Richard, 85716 Lohhof (DE); Peichl, Lothar, Dr., 85221 Dachau (DE)

(56) Entgegenhaltungen:
- US-A- 3 519 282
- US-A- 4 227 703
- US-A- 4 589 823
- US-A- 4 851 188
- US-A- 5 551 840
- US-A- 5 704 759

## Beschreibung

Die Erfindung betrifft eine Turbinenlaufschaufel für den Läufer eines Gasturbinentriebwerks.

Um unerwünschte, den Wirkungsgrad von Gasturbinentriebwerken beeinflussende Spaltverluste gering zu halten, ist es erforderlich, den Spalt zwischen den hochtourig drehenden Turbinenlaufschaufeln und dem sie umgebenden Gehäuse möglichst dauerhaft gering zu halten.

Das Spaltmaß dieser Spalte ist bekanntlich nicht konstant, sondern unterliegt während den unterschiedlichen Betriebsphasen des Gasturbinentriebwerks Veränderungen. So erfahren u. a. die Turbinenlaufschaufeln unter hohen Betriebsbelastungen aufgrund der thermischen Beanspruchung und der wirkenden Zentrifugalkraft eine Streckung in radiale Richtung. Das die Turbinenlaufschaufeln umgebende Gehäuse weist zudem eine unterschiedliche thermische Reaktionscharakteristik auf. Dies alles führt zu den zu beobachtenden Veränderungen des Spaltmaßes.

Um diesen unterschiedlichen thermischen Reaktionscharakteristiken von Turbinenlaufschaufel und umgebendem Gehäuse und der Forderung nach geringem Spaltmaß zwischen den Schaufelspitzen und dem Gehäuse Rechnung tragen zu können, ist es bekannt zwischen den Schaufelspitzen der Turbinenlaufschaufeln und dem umgebenden Gehäuse einen "Kontakt" zuzulassen. Um hierbei Beschädigungen der Schaufelspitzen der Turbinenlaufschaufeln und des umgebenden Gehäuse auszuschließen, ist auf die Schaufelspitzen der Turbinenlaufschaufeln eine so genannte Abrasivbeschichtung aufgebracht, während das umgebende Gehäuse mit einer entsprechenden Abriebbeschichtung ausgekleidet ist.

So offenbart US-A-5,704,759 eine Laufschaufel mit einer Schaufelspitze, einer Eintritts- und Austrittskante und einer auf der Schaufelspitze aufgebrachten Abrasivbeschichtung, die in Betrieb einen Einlaufbelag streifen kann. Dabei enthält die Abrasivbeschichtung Partikel aus kubischem Bomitrid, der Einlaufbelag besteht aus Yttrium stabilisiertem Zirkonoxid.

US-A- 4,589,823 zeigt eine Laufschaufel mit einer Abrasivbeschichtung auf einen so genannten "Squealer Tip", bei dem ein Teil der Schaufelspitze abgesenkt ist.

Beim Anstreifen der Schaufelspitze an die in das umgebende Gehäuse eingebrachte Abriebbeschichtung schneiden bzw. reiben nun die auf die Schaufelspitze aufgebrachten Abrasivpartikel in die Abriebbeschichtung und tragen diese ab. Mit dem Abrieb der Abriebbeschichtung ist auch gleichzeitig ein gewisser Verschleiß der Abrasivbeschichtung verbunden.

Der Verschleiß der auf die Schaufelspitzen der Turbinenlaufschaufeln aufgebrachten Abrasivbeschichtung hängt von einer Vielzahl von Faktoren, wie z. B. Materialpaarungen, Temperatur, Drehzahlen u. a., ab.

Ein schneller Verschleiß der Abrasivbeschichtung erweist sich als nachteilig, da dies einer seits zu einer Spaltvergrößerung zwischen Schaufelspitze und umgebendem Gehäuse führt, was, wie bereits ausgeführt, Wirkungsgradverluste zur Folge hat. Andererseits bedeutet der vorzeitige Verschleiß der Abrasivbeschichtung auch, dass die Schaufelspitzen der Turbinenlaufschaufeln selbst einem vorzeitigen Verschleiß unterliegen, also praktisch abgeschliffen werden, was wiederum aufwendige Reparaturen der Schaufelspitzen und eine Verkürzung der Lebensdauer des Gasturbinentriebwerks nach sich zieht.

Ausgehend von diesen Erkenntnissen liegt der Erfindung die Aufgabe zugrunde, hier Abhilfe zu schaffen durch eine neue Gestaltung der Schaufelspitzen der Turbinenlaufschaufeln eines Gasturbinentriebwerks, um den Verschleiß der Abrasivbeschichtung auf den Schaufelspitzen, insbesondere im Bereich der Eintritts- und Austrittskante der Schaufelspitzen, zu minimieren.

Diese Aufgabe ist erfindungsgemäß nach den Merkmalen des Patentanspruches 1 gelöst. Weitere Merkmale der Erfindung ergeben sich aus den Unteransprüchen.

Durch die Maßnahmen nach der Erfindung wird entlang der Profiltiefe T an der Schaufelspitze der Turbinenlaufschaufel die mit der Abriebbeschichtung in Kontakt kommende wirksame Länge D_{A} der Abrasivbeschichtung auf der Schaufelspitze, insbesondere im Bereich der Eintritts- und Austrittskante, stets größer, mindestens aber gleich groß einem vorgegebenen Mindestmaß D_{A,min} gehalten. Dabei ist das Mindestmaß D_{A,min} größer Null.

Untersuchungen haben gezeigt, dass bei ansonsten konstanten Bedingungen, wie Materialpaarungen, Temperatur, Drehzahl u. ä. die wirksame Länge D_{A} der Abrasivbeschichtung auf der Schaufelspitze der Turbinenlaufschaufel eine kritische Größe für das Auftreten und das Ausmaß des zu beobachtenden Verschleiß der Abrasivbeschichtung auf der Schaufelspitze darstellt.

Die wirksame Länge D_{A} der Abrasivbeschichtung entspricht dabei der parallel zur Laufrichtung L der Turbinenlaufschaufel gemessenen Profildicke D der Schaufelspitze.

Weist die Schaufelspitze Zonen auf, die keine Abrasivbeschichtung tragen, z. B. Vertiefungen für Schaufelkühlung (Kühlluftbohrungen oder so genannte Schaufelkrone), so addiert sich die wirksame Länge D_{A} der Abrasivbeschichtung aus den entsprechenden, mit Abrasivbeschichtung versehenen, Teillängen.

Entsprechend der Geometrie des Schaufelprofils variiert die Profildicke D des Schaufelprofils und somit die wirksame Länge D_{A} der auf die Schaufelspitze aufgebrachten Abrasivbeschichtung. Tendenziell verkürzt sich die wirksame Länge D_{A} der Abrasivbeschichtung auf der Schaufelspitze im Bereich der Eintritts- und Austrittskante.

Unterschreitet die wirksame Länge D_{A} der Abrasivbeschichtung und somit die Profildicke D an der Schaufelspitze ein bestimmtes Maß, im folgenden auch D_{A,min} bezeichnet, so sind verstärkte Verschleißerscheinungen der Abrasivbeschichtung zu beobachten.

Der erhöhte Verschleiß der Abrasivbeschichtung bei einer geringen wirksamen Länge D_{A} der Abrasivbeschichtung ist theoretisch wie folgt zu erklären: jeder abtragende Punkt der Abrasivbeschichtung, z. B. jedes Abrasivpartikel, erbringt eine gewisse Abtragsleistung in der Abriebbeschichtung (Liner) und unterliegt dafür selbst einem gewissen Verschleiß (Eigenverschleiß). Je weniger abtragende Punkte nun - bezogen auf die Laufrichtung L der Turbinenlaufschaufel - hintereinander liegen, d. h. je kürzer die Profildicke D und damit die wirksame Länge D_{A} der Abrasivbeschichtung ist, desto höher wird die individuelle Abtragsleistung, die der einzelne Punkt zu erbringen hat und damit auch der Eigenverschleiß.

Versuche haben ferner gezeigt, dass im Bereich der Eintritts- und Austrittskante ein erhöhter Verschleiß der Abrasivbeschichtung zu beobachten ist.

Wegen der Abhängigkeit von vielen turbinenspezifischen Parametern, ist D_{A,min} ebenfalls keine feste Größe, sondern ergibt sich für jede Turbinenauslegung neu. Da an der Eintritts- und Austrittskante die Profildicke D und somit auch die wirksame Länge D_{A} der Abrasivbeschichtung geometriebedingt sehr klein ist, wird D_{A,min} in diesen Bereichen bevorzugt unterschritten.

Bei einem gut funktionierenden System aus Schaufelspitze mit Abrasivbeschichtung und umgebender Abriebbeschichtung (Liner) ist daher der Abtrag der Abriebbeschichtung (Liner) deutlich größer als der vorzeitige, ungewollte und unerwünschte Verschleiß der Abrasivbeschichtung.

Die Realisierung der Überschreitung des vorgegebenen Mindestmaßes D_{A,min} der wirksamen Länge D_{A} der Abrasivbeschichtung auf der Schaufelspitze entlang der Profiltiefe T durch eine Abflachung im Bereich der Eintritts- und Austrittskante parallel zur Laufrichtung L der Turbinenlaufschaufel hat den Vorteil, dass diese Abflachung auf einfache Art und Weise eingestellt werden kann, so dass das Einschneiden der Schaufelspitze in die Abriebbeschichtung (Liner) entlang der Profiltiefe T erst ab einer wirksamen Länge D_{A} ≥ D_{A,min} erfolgt. Somit ist sichergestellt, dass die verschleißanfälligen Bereiche um die Eintritts- und Austrittskante, die entsprechend dem Schaufelprofil geometriebedingt nur eine kurze wirksame Länge D_{A} aufweisen, nicht mit der Abriebbeschichtung (Liner) in Kontakt kommen. Der vorzeitige und unerwünschte Verschleiß der Abrasivbeschichtung im Bereich der Eintritts- und Austrittskante und somit auch der Verschleiß der Schaufelspitze selbst wird also nunmehr erfolgreich verhindert.

Die nach einer weiteren Ausführungsform der Erfindung realisierte Überschreitung des vor gegebenen Mindestmaßes D_{A,min} der wirksamen Länge D_{A} der Abrasivbeschichtung auf der Schaufelspitze entlang der Profiltiefe T durch das Vorsehen von in Laufrichtung L der Turbinenlaufschaufel lokal begrenzten Deckbändern (microshrouds) im Bereich der Eintrittskante und der Austrittskante hat den Vorteil, dass mit Hilfe dieser Deckbänder auf eine einfache Art und Weise in diesen Bereichen eine Verbreiterung der Profildicke D an der Schaufelspitze erfolgt, was einer entsprechenden Erhöhung der wirksamen Länge D_{A} entspricht. Auch durch diese Maßnahme ist ein vorzeitiger Verschleiß ausgeschlossen.

Vorzugsweise sind die Deckbänder nicht nur auf die Bereiche um die Eintritts- und Austrittskante beschränkt, sondern als längs des Schaufelsprofils umlaufende und in Laufrichtung L der Turbine lokal begrenzte Deckbänder (microshrouds) ausgeführt.

Sind für das erfindungsgemäße Überschreiten des vorgegebenen Mindestmaßes D_{A,min} der wirksamen Länge D_{A} der Abrasivbeschichtung auf der Schaufelspitze Deckbänder vorgesehen, so ist die Abrasivbeschichtung vorzugsweise auf die Deckbänder aufgebracht.

Die erfindungsgemäße Forderung, dass auf der Schaufelspitze für die wirksame Länge D_{A} der Abrasivbeschichtung stets D_{A} ≥ D_{A,min} gilt, ist auch durch eine Kombination der bereits geschilderten Maßnahmen realisierbar.

Die Erfindung ist nachfolgend anhand dreier in der Zeichnung mehr oder minder schematisch dargestellten Ausführungsbeispiele beschrieben. Es zeigen:
- Fig. 1: eine perspektivische Darstellung einer Turbinenlaufschaufel mit einer auf die Schaufelspitze aufgebrachten Abrasivbeschichtung;
- Fig. 2: eine vergrößerte Darstellung des Profils der Turbinenlaufschaufel aus Fig. 1;
- Fig. 3: eine vergrößerten Darstellung der Abrasivbeschichtung anhand einer Schnittdarstellung parallel zur Laufrichtung L des Profils aus Fig. 2;
- Fig. 4: die Bestimmung der wirksamen Länge der Abrasivbeschichtung an einer Schaufelspitze mit Schaufelkrone;
- Fig. 5: das Profil einer Schaufelspitze mit den erfindungsgemäßen Absenkungen im Bereich der Eintritts- und Austrittskante;
- Fig. 6: ein weiteres Profil einer Schaufelspitze mit an der Eintritts- und Austrittskante vorliegenden Deckbänder und
- Fig. 7: eine Kombination von umlaufenden Deckbändern und Absenkungen an der Eintritts- und Austrittskante bei einem weiteren Profil einer Schaufelspitze,
- Fig. 8: eine Teilansicht der Abflachung im Bereich der Eintrittskante gemäß Fig. 5.

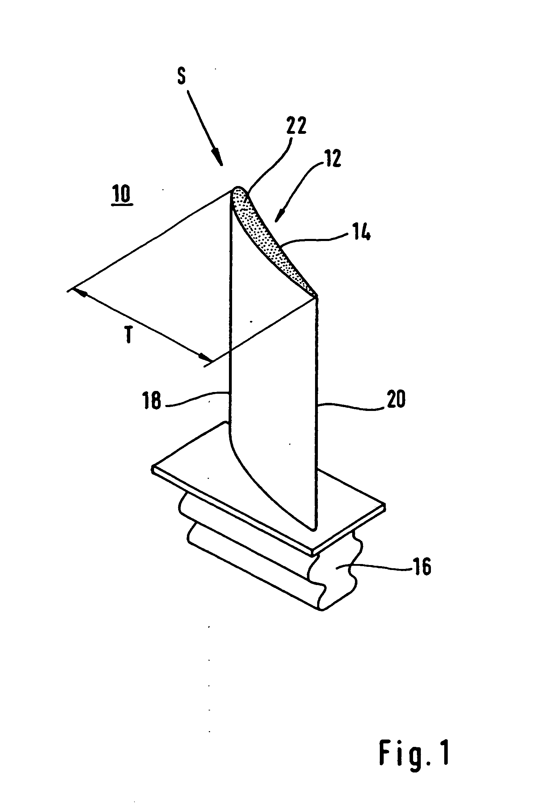

Fig. 1 zeigt schematisch eine Turbinenlaufschaufel 10 für einen Läufer eines Gasturbinetriebwerks. Der Läufer und das Gasturbinetriebwerk sind aus Gründen der Übersichtlichkeit nicht dargestellt.

Die Turbinenlaufschaufel 10 weist eine Schaufelspitze 12 mit einem Schaufelprofil 14, einen Schaufelfuß 16, in Strömungsrichtung S stromaufwärts eine Eintrittskante 18 sowie in Strömungsrichtung S stromabwärts eine Austrittskante 20 auf. An der Schaufelspitze 12 hat das Schaufelprofil 14 parallel zur Strömungsrichtung S eine Profiltiefe T.

Auf die Schaufelspitze 12 ist eine Abrasivbeschichtung 22 aufgebracht. Die Abrasivbeschichtung 22 kann im Betrieb über eine so genannte Abriebbeschichtung mit einem umgebenden Gehäuse des Gasturbinentriebwerks in "Kontakt" kommen. Das Gehäuse als auch die Abriebbeschichtung sind hier nicht dargestellt.

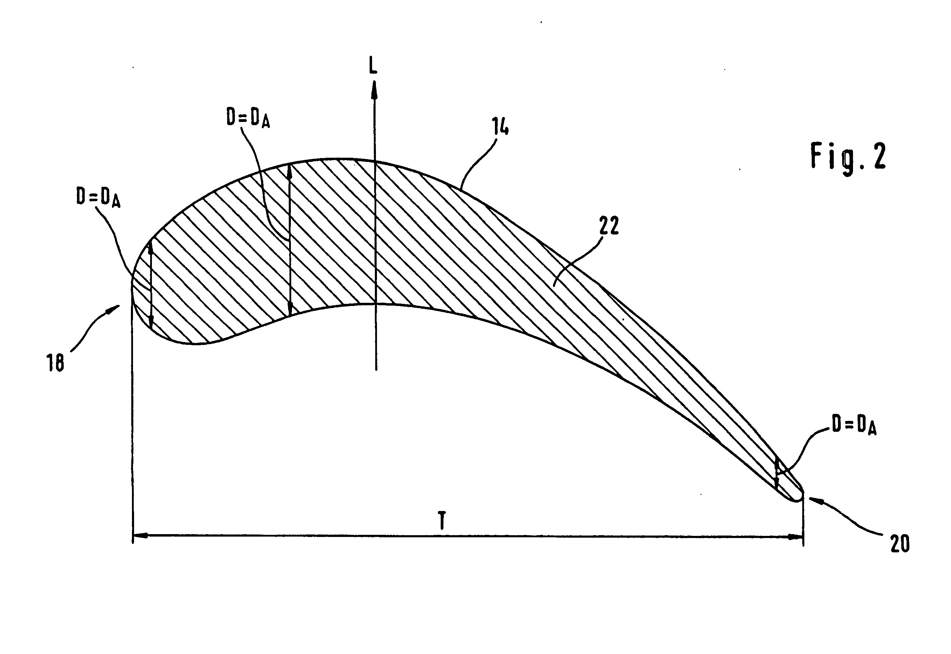

Fig. 2 zeigt eine vergrößerte Darstellung des Schaufelsprofils 14 an der Schaufelspitze 12 der Turbinenlaufschaufel 10. Parallel zur so genannten Laufrichtung L der Turbinenlaufschaufel 10 weist das Schaufelprofil 14 entlang der Profiltiefe T geometriebedingt unterschiedliche Profildicken D auf. Im Bereich der Eintrittskante 18 und der Austrittskante 20 ist aufgrund der Profilgeometrie nur eine geringe Profildicke D vorhanden. Auf die Schaufelspitze 12 ist, wie bereits erwähnt, die Abrasivbeschichtung 22 aufgebracht. Entsprechend der Profildicke D hat auf der Schaufelspitze 12 parallel zur Laufrichtung L der Turbinenlaufschaufel 10 die Abrasivbeschichtung eine so genannte wirksame Länge D_{A}

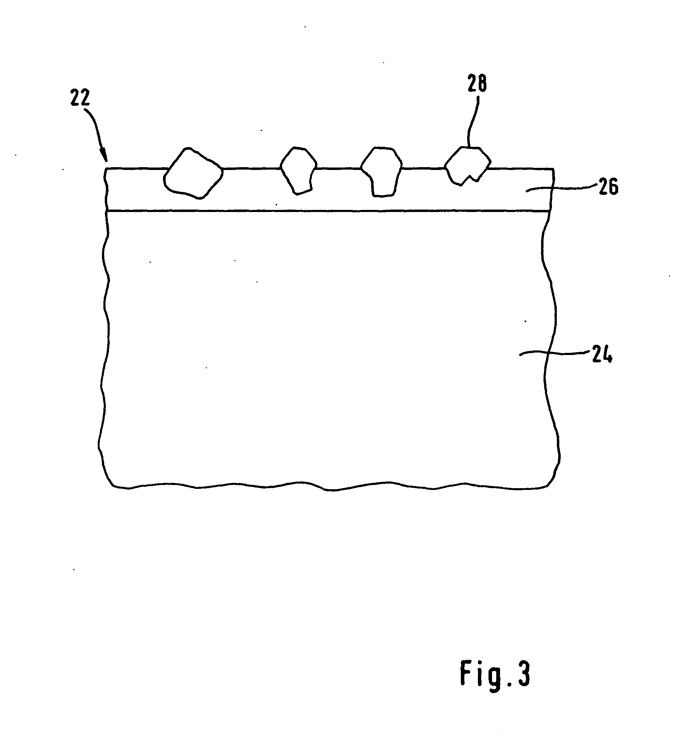

Zur Verdeutlichung der Abrasivbeschichtung 22 ist in Fig. 3 nochmals das Schaufelprofil 14 anhand einer Schnittdarstellung parallel zur Laufrichtung L gezeigt. Neben einem Schaufelgrundwerkstoff 24 ist an der Schaufelspitze 12 die Abrasivbeschichtung 22 dargestellt. Die Abrasivbeschichtung 22 ist im vorliegenden Ausführungsbeispiel aus einer Matrix (MCrAIY) 26 mit eingelagerten Abrasivpartikel 28 aufgebaut.

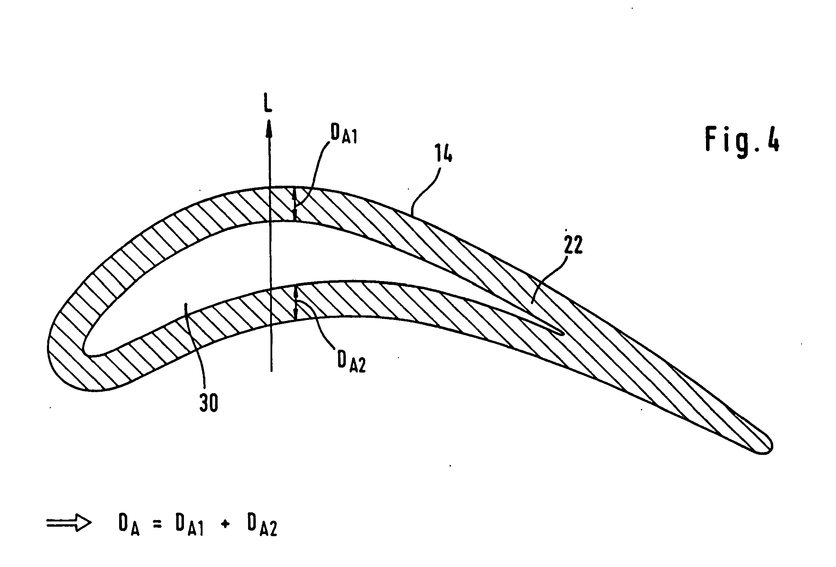

Falls das Schaufelprofil 14 an der Schaufelspitze 12 Zonen ohne Abrasivbeschichtung 30 aufweist, z. B. Vertiefungen für die Schaufelkühlung (Kühlluftbohrungen, oder so genannte Schaufelkrone), so erfolgt, wie in Fig. 4 gezeigt, die Bestimmung der wirksamen Länge der Abrasivbeschichtung D_{A} durch Addition der mit Abrasivbeschichtung 22 versehenen Teillängen.

Wie bereits ausgeführt wurde, ist der Verschleiß der Abrasivbeschichtung 22 bei ansonsten konstanten Bedingungen wie z. B. Materialpaarung, Temperatur, Drehzahl u. ä., von der wirksamen Länge D_{A} der Abrasivbeschichtung 22 abhängig. Unterschreitet die wirksame Länge D_{A} der Abrasivbeschichtung 22 ein vorgegebenes Mindestmaß, im folgendem D_{A,min} genannt, so ist mit einem erhöhten Verschleiß der Abrasivbeschichtung 22 zu rechnen. Bei dem vorgegebenen Mindestmaß D_{A,min} handelt es sich um einen turbinenspezifischen Parameter, der sich aus der jeweiligen Turbinenauslegung ergibt.

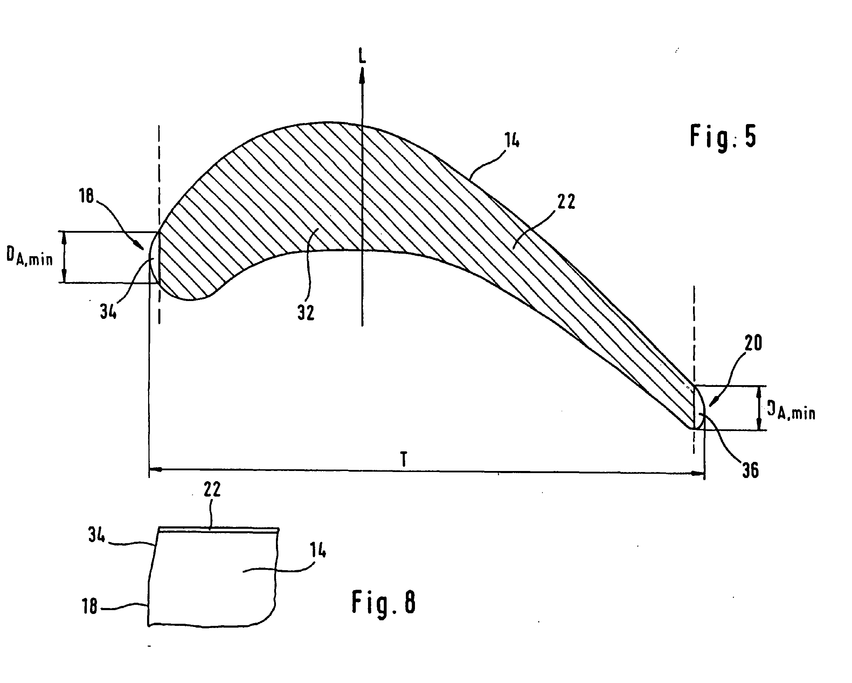

In Figur 5 ist ein Ausführungsbeispiel dargestellt, bei dem die erfindungsgemäße Maßgabe, dass die wirksame Länge D_{A} stets größer, mindestens aber gleich groß dem vorgegebenen Mindestmaß D_{A,min} erfüllt ist, wobei das Mindestmaß D_{A,min} größer Null ist. Für die vorliegende Turbinenlaufschaufel 10 ist aus der Turbinenauslegung bekannt, dass an der Schaufelspitze 12 das vorgegebene Mindestmaß D_{A,min} = 2mm (±0,5mm) beträgt, d. h. dass an der Schaufelspitze die wirksame Länge D_{A} stets größer bzw. aber mindestens gleich groß als das vorgegebene Mindestmaß D_{A,min} = 2mm (±0,5mm) ist. An der Schaufelspitze 12 weist das Schaufelprofil 14 hierfür neben einem mit Abrasivbeschichtung 22 versehenen Mittelbereich 32 jeweils im Bereich der Entrittskante 18 eine Abflachung 34 und im Bereich der Austrittskante 20 eine Abflachung 36 auf. Die parallel zur Laufrichtung L der Turbinenlaufschaufel 10 angeordneten Abflachungen 34 und 36 sind dabei so angeordnet, dass jeweils im Randbereich zwischen Mittelbereich 32 und den abgesenkten Bereichen 34, 36 gerade die Forderung D_{A} ≥ D_{A,min} erfüllt ist. Da jetzt die Schaufelspitze 12 entlang der Profiltiefe T nur über den Mittelbereich 32 mit der umgebenden Abriebbeschichtung (Liner) in "Kontakt" treten kann, ist folglich ein vorzeitiger Verschleiß der Abrasivbeschichtung 22 im Bereich der Eintritts- und Austrittskante 18, 20 ausgeschlossen. Siehe hierzu auch die Teilansicht in Laufrichtung gemäß Fig. 8.

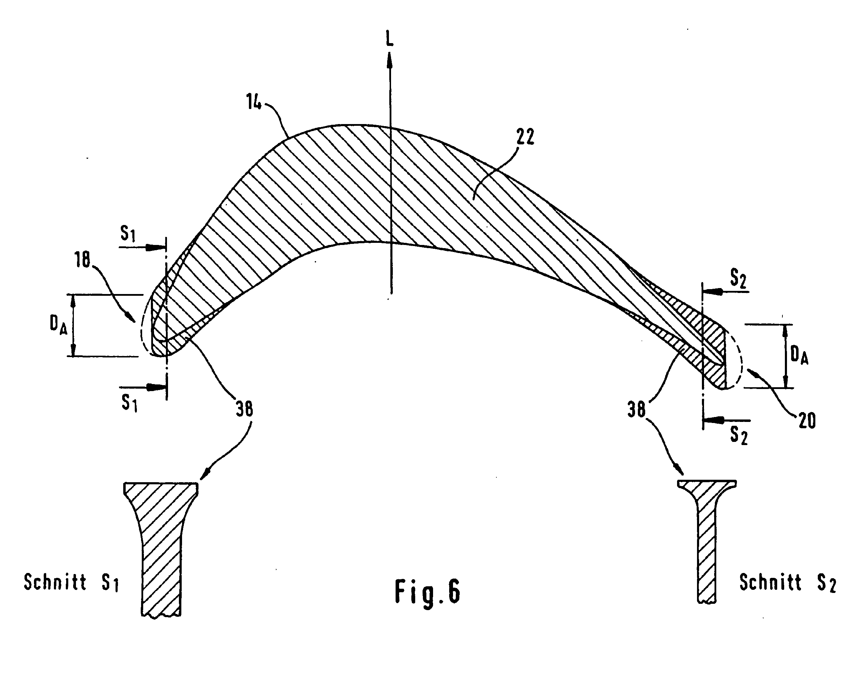

Eine weiteres Ausführungsbeispiel der Erfindung ist in Fig. 6 dargestellt. Die erfindungsgemäße Forderung, dass im Bereich der Eintritts- und Austrittskante 18, 20 die wirksame Länge D_{A} der Abrasivbeschichtung 22 stets größer, mindestens aber gleich groß dem vorgegebenen Mindestmaß D_{A,min} ist, ist durch das Vorsehen eines in Laufrichtung L der Turbinenlaufschaufel 10 lokal begrenzten Deckbandes 38 realisiert. Im Gegensatz zu bereits bekannten Deckbändern sind die Deckbänder 38 nur im Bereich der Ein- und Austrittskante, nicht jedoch im übrigen Profilbereich vorgesehen, außerdem ist in diesem Fall die Abrasivbeschichtung 22 auf die Deckbänder 38 aufgebracht.

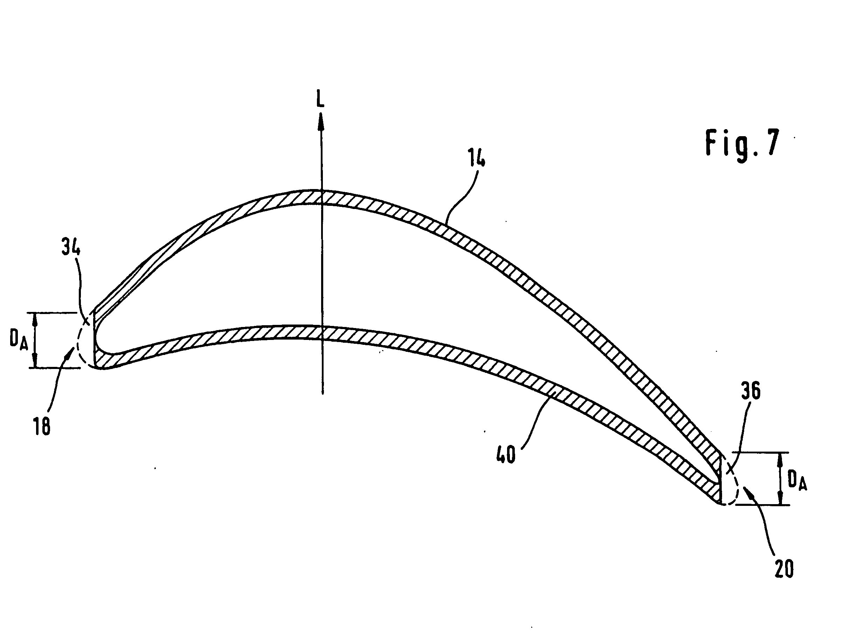

In Fig. 7 ist eine Kombination der bereits geschilderten erfindungsgemäßen Maßnahmen gezeigt. Dabei weist das Schaufelprofil 14 an der Schaufelspitze 12 ein längs der Kontur des Schaufelprofils 14 umlaufendes, in Laufrichtung L der Turbinenlaufschaufel 10 lokal begrenztes Deckband 40 auf. In Kombination dazu ist zusätzlich noch der Bereich um die Eintritts- und Austrittskante 18, 20 mit Abflachungen 34, 36 versehen.
Zudem weisen die Deckbänder 38 keine gerade Kanten, sondern eine der Profilkontur nachfolgende Kantenform auf. Da das Deckband 40 in Laufrichtung L der Turbinenlaufschaufel 10 lokal begrenzt ist, ist zudem ein Berühren der einzelnen Deckbänder untereinander ausgeschlossen. Das Deckband 40 hat den Vorteil, dass eine nach thermodynamischen und aerodynamischen Kriterien optimale Gestaltung der Eintritts- und Austrittskante 18, 20 (z. B dünn) erleichtert wird.

## Patentansprüche

1. Turbinenlaufschaufel (10) für einen Läufer eines Gasturbinentriebwerkes, der in einem Gehäuse drehbar gelagert ist, welche eine Schaufelspitze (12), und eine in Strömungsrichtung (S) stromaufwärts angeordnete Entrittskante (18) und eine stromabwärts angeordnete Austrittskante (20) aufweist, mit einem Schaufelprofil (14), das parallel zur Strömungsrichtung (S) eine Profiltiefe (T), und parallel zur Laufrichtung (L) der Turbinenlaufschaufel (10) eine Profildicke (D) besitzt,
mit einer auf die Schaufelspitze (12) aufgebrachten Abrasivbeschichtung (22), die entlang der Profiltiefe (T) eine der Profildicke (D) entsprechende wirksame Länge (D_{A}) hat, wobei die Schaufelspitze (12) mit ihrer Abrasivbeschichtung (22) im Betrieb eine Abriebbeschichtung streifen kann, die in das umgebende Gehäuse eingebracht ist,
**dadurch gekennzeichnet, dass**
die mit der Abriebbeschichtung in Kontakt kommende Abrasivbeschichtung (22) auf der Schaufelspitze (12) im Bereich der Eintritts- und Austrittskante (18, 20) eine wirksame Länge (D_{A}) aufweist, die stets größer Null ist, mindestens aber gleich groß einem vorgegebenen Mindestmaß (D_{A,min}).

2. Turbinenlaufschaufel (10) nach Anspruch 1, **dadurch gekennzeichnet, dass** entlang der Profiltiefe (T) die Überschreitung des vorgegebenen Mindestmaßes (D_{A,min}) der wirksamen Länge (D_{A}) der Abrasivbeschichtung (22) an der Schaufelspitze (12) durch eine Abflachung im Bereich der Eintrittskante und der Austrittskante (34, 36) parallel zur Laufrichtung (L) der Turbinenlaufschaufel (10) realisiert ist.

3. Turbinenlaufschaufel (10) nach Anspruch 1, **dadurch gekennzeichnet, dass** entlang der Profiltiefe (T) die Überschreitung des vorgegebenen Mindestmaßes (D_{A,min}) der wirksamen Länge (D_{A}) der Abrasivbeschichtung (22) an der Schaufelspitze (12) durch das Vorsehen je eines in Laufrichtung (L) der Turbinenlaufschaufel (10) lokal begrenzten Deckbandes (38) im Bereich der Eintrittskante (18) und der Austrittskante (20) verwirklicht ist.

4. Turbinenlaufschaufel (10) nach Anspruch 1, **dadurch gekennzeichnet, dass** entlang der Profiltiefe (T) die Überschreitung des vorgegebenen Mindestmaßes (D_{A,min}) der wirksamen Länge (D_{A}) der Abrasivbeschichtung (22) an der Schaufelspitze (12) durch das Vorsehen eines längs des Schaufelprofils (14) umlaufenden und in Laufrichtung (L) der Turbinenlaufschaufel (10) lokal begrenzten Deckbandes (40) (microshroud) sichergestellt ist.

5. Turbinenlaufschaufel (10) nach Anspruch 1 bis 3, **dadurch gekennzeichnet, dass** entlang der Profiltiefe (T) die Überschreitung des vorgegebenen Mindestmaßes (D_{A,min}) der wirksamen Länge (D_{A}) der Abrasivbeschichtung (22) an der Schaufelspitze (12) durch eine Kombination aus einer Abflachung im Bereich der Eintritts- und/oder der Austrittskante (34, 36) und dem Vorsehen von Deckbändem (38) im Bereich der Eintritts- und Austrittskante (18, 20) realisiert ist.

6. Turbinenlaufschaufel (10) nach Anspruch 1 und 2, sowie nach Anspruch 4, **dadurch gekennzeichnet, dass** entlang der Profiltiefe (T) die Überschreitung des vorgegebenen Mindestmaßes (D_{A,min}) der wirksamen Länge (D_{A}) der Abrasivbeschichtung (22) an der Schaufelspitze (12) durch eine Kombination aus der Abflachung im Bereich der Eintritts- und/oder Austrittskante (34, 36) und eines das Schaufelprofil (14) umlaufenden Deckbandes (40) sichergestellt ist.

7. Turbinenlaufschaufel (10) nach Anspruch 3 bis 6, **dadurch gekennzeichnet, dass** die Abrasivbeschichtung (22) auf die Deckbänder (38, 40) aufgebracht ist.

8. Turbinenlaufschaufel (10) nach Anspruch 3 bis 7, **dadurch gekennzeichnet, dass** die Deckbänder (38, 40) (microshrouds) untereinander berührungsfrei angeordnet sind.

9. Turbinenlaufschaufel (10) nach Anspruch 3 bis 8, **dadurch gekennzeichnet, dass** die Kanten der Deckbänder (38, 40) der Profilkontur des Schaufelprofils (14) auf der Schaufelspitze (12) nachfolgend angeordnet sind.

## Claims

1. A turbine blade for a rotor of a gas turbine which is mounted in a casing such that it is able to rotate, which has a blade tip (12), a leading edge (18) positioned upstream in the direction of flow (S) and a trailing edge (20) positioned downstream in the direction of flow (S), with a blade profile (14) which has a profile depth (T) parallel to the direction of flow (S) and a profile thickness (D) parallel to the direction of running (L) of the turbine blade (10), with an abrasive coating (22) applied to the blade tip (12) which has an effective length (D_{A}) along the profile depth (T) which corresponds to the profile thickness (D), in operation the abrasive coating (22) of the blade tip (12) being able to graze a abradable coating which is fitted in the surrounding casing,
**characterised in that**
in the area of the leading and trailing edges (18, 20) the abrasive coating (22) on the blade tip (12) which comes into contact with the abradable coating has an effective length (D_{A}) which is always greater than zero but at least equal to a predetermined minimum value (D_{A,min}).

2. A turbine blade (10) in accordance with claim 1,
**characterised in that**
along the profile depth (T) the predetermined minimum value (D_{A,min}) for the effective length (D_{A}) of the abrasive coating (22) on the blade tip (12) is exceeded by a flat section in the area of the leading and trailing edges (34, 36) parallel to the direction of running (L) of the turbine blade (10).

3. A turbine blade (10) in accordance with claim 1,
**characterised in that**
along the profile depth (T) the predetermined minimum value (D_{A,min}) for the effective length (D_{A}) of the abrasive coating (22) on the blade tip (12) is exceeded by the provision of microshrouds (38) locally limited in the direction of running (L) of the turbine blade (10) in the area of the leading edge (18) and the trailing edge (20).

4. A turbine blade (10) in accordance with claim 1,
**characterised in that**
along the profile depth (T) the predetermined minimum value (D_{A,min}) for the effective length (D_{A}) of the abrasive coating (22) on the blade tip (12) is exceeded by the provision of a microshroud (40) locally limited in the direction of running (L) of the turbine blade running around the length of the blade profile (14).

5. A turbine blade (10) in accordance with claims 1 to 3,
**characterised in that**
along the profile depth (T) the predetermined minimum value (D_{A,min}) for the effective length (D_{A}) of the abrasive coating (22) on the blade tip (12) is exceeded by a combination of a flat section in the area of the leading and/or trailing edges (34, 36) and the provision of microshrouds (38) in the area of the leading and trailing edges (18, 20).

6. A turbine blade (10) in accordance with claim 1 and 2 and claim 4,
**characterised in that**
along the profile depth (T) the predetermined minimum value (D_{A,min}) for the effective length (D_{A}) of the abrasive coating (22) on the blade tip (12) is exceeded by a combination of the flat section in the area of the leading and/or trailing edges (34, 36) and a microshroud (40) running around the blade profile (14).

7. A turbine blade (10) in accordance with claims 3 to 6,
**characterised in that**
the abrasive coating (22) is applied to the microshrouds (38, 40).

8. A turbine blade (10) in accordance with claims 3 to 7,
**characterised in that**
the microshrouds (38, 40) are positioned such that they do not touch one another.

9. A turbine blade (10) in accordance with claims 3 to 8,
**characterised in that**
the edges of the microshrouds (38, 40) are positioned such that they follow the profile contour of the blade profile (14) on the blade tip (12).

## Revendications

1. Aube mobile de turbine (10) destinée à un rotor d'un mécanisme d'entraînement de turbine à gaz, qui est logé de manière rotative dans un carter, laquelle présente une pointe d'aube (12) et un bord d'attaque (18) disposé en amont dans le sens d'écoulement (S) et un bord de fuite (20) disposé en aval, avec un profil d'aube (14), qui possède parallèlement au sens d'écoulement (S) une profondeur de profil (T) et parallèlement au sens de rotation (L) de l'aube mobile de turbine (10) une épaisseur de profil (D),
comportant un revêtement abrasif (22) appliqué sur la pointe d'aube (12), qui a le long de la profondeur de profil (T) une longueur efficace (D_{A}) correspondant à l'épaisseur de profil (D), la pointe d'aube (12) pouvant racler en fonctionnement avec son revêtement abrasif (22) un revêtement d'usure, qui est introduit dans le carter environnant,
**caractérisée en ce que**
le revêtement abrasif (22) entrant en contact avec le revêtement d'usure sur la pointe d'aube (12) présente dans la zone du bord d'attaque et de fuite (18, 20) une longueur efficace (D_{A}), qui est toujours supérieure à zéro, et au moins aussi grande qu'une valeur minimum prescrite (D_{A,min}).

2. Aube mobile de turbine (10) selon la revendication 1, **caractérisée en ce que** le long de la profondeur de profil (T), le dépassement de la valeur minimum prescrite (D_{A,min}) de la longueur efficace (D_{A}) du revêtement abrasif (22) au niveau de la pointe d'aube (12) est réalisé par un aplatissement dans la zone du bord d'attaque et du bord de fuite (34, 36) parallèlement au sens de rotation (L) de l'aube mobile de turbine (10).

3. Aube mobile de turbine (10) selon la revendication 1, **caractérisée en ce que** le long de la profondeur de profil (T), le dépassement de la valeur minimum prescrite (D_{A,min}) de la longueur efficace (D_{A}) du revêtement abrasif (22) au niveau de la pointe d'aube (12) est concrétisé en prévoyant respectivement une bande de couverture (38) délimitée localement dans le sens de rotation (L) de l'aube mobile de turbine (10) dans la zone du bord d'attaque (18) et du bord de fuite (20).

4. Aube mobile de turbine (10) selon la revendication 1, **caractérisée en ce que** le long de la profondeur de profil (T), le dépassement de la valeur minimum prescrite (D_{A,min}) de la longueur efficace (D_{A}) du revêtement abrasif (22) au niveau de la pointe d'aube (12) est assuré en prévoyant une bande de couverture (40) (micro-enveloppe) tournant le long du profilé d'aube (14) et délimitée localement dans le sens de rotation (L) de l'aube mobile de turbine (10).

5. Aube mobile de turbine (10) selon les revendications 1 à 3, **caractérisée en ce que** le long de la profondeur de profil (T), le dépassement de la valeur minimum prescrite (D_{A,min}) de la longueur efficace (D_{A}) du revêtement abrasif (22) au niveau de la pointe d'aube (12) est réalisé en combinant un aplatissement dans la zone du bord d'attaque et/ou de fuite (34, 36) et en prévoyant des bandes de couverture (38) dans la zone du bord d'attaque et de fuite (18, 20).

6. Aube mobile de turbine (10) selon les revendications 1 et 2 et selon la revendication 4, **caractérisée en ce que** le long de la profondeur de profil (T), le dépassement de la valeur minimum prescrite (D_{A,min}) de la longueur efficace (D_{A}) du revêtement abrasif (22) au niveau de la pointe d'aube (12) est assuré en combinant l'aplatissement dans la zone du bord d'attaque et/ou de fuite (34, 36) et en prévoyant une bande de couverture (40) entourant le profil d'aube (14).

7. Aube mobile de turbine (10) selon les revendications 3 à 6, **caractérisée en ce que** le revêtement abrasif (22) est appliqué sur les bandes de couverture (38, 40).

8. Aube mobile de turbine (10) selon les revendications 3 à 7, **caractérisée en ce que** des bandes de couverture (38, 40) (micro-enveloppe) sont disposées sans contact.

9. Aube mobile de turbine (10) selon les revendications 3 à 8, **caractérisée en ce que** les bords des bandes de couverture (38, 40) du contour du profil d'aube (14) sont disposés l'un à la suite de l'autre sur la pointe d'aube (12).
